# FASCICULE DE BREVET EUROPEEN

(11) **EP 0 594 469 B1**
(45) Date de publication et mention de la délivrance du brevet: **18.03.1998**
(21) Numéro de dépôt: 93402041.3
(22) Date de dépôt: 11.08.1993
(51) Int. Cl.: C04B 30/02, C04B 14/06, C04B 28/26

(54) **Panneau d'isolation thermique et/ou acoustique et ses procédés d'obtention**
Wärme- und/oder Schallisolierungsplatte und Verfahren zur ihrer Herstellung
Heat- and/or sound insulating board and method of making the same

(30) Priorité: 18.09.1992 FR 9211133
(43) Date de publication de la demande: 27.04.1994
(73) Titulaire: RHONE-POULENC CHIMIE, 92408 Courbevoie Cédex (FR)
(72) Inventeur: Ferrary, Pierre, F-69540 Irigny (FR); Haggiage, Johnny, F-69110 Sainte Foy Les Lyon (FR); Viot, Jean-Francois, F-69540 Irigny (FR)
(74) Mandataire: Dubruc, Philippe

(56) Documents cités:
- EP-A- 0 027 633
- EP-A- 0 168 717
- EP-A- 0 190 582
- EP-A- 0 205 155
- EP-A- 0 280 623
- GB-A- 2 256 192

## Description

La présente invention concerne des panneaux d'isolation thermique et/ou acoustique et leurs procédés d'obtention.

L'isolation thermique et l'insonorisation des murs et des plafonds sont essentielles dans le domaine de la construction des immeubles et des maisons d'habitation. Dans ce but, de nombreux matériaux sont utilisés.

Les matériaux les plus couramment employés sont les panneaux thermo-isolants et/ou insonorisants. Ces panneaux, généralement de forme carrée ou rectangulaire et d'épaisseur variable, sont constitués de différents composants. Ils comprennent généralement une charge sous forme finement divisée, de préférence très dispersée, ayant une faible conductivité thermique. On emploie habituellement comme charge du noir de carbone, du sulfate ou du carbonate de calcium, de la silice pyrogénique et/ou de la silice de précipitation sous forme de poudre.

Des panneaux thermo-isolants sont également utilisés pour l'isolation à haute température des enceintes thermiques, notamment les enceintes thermiques de type industriel (fours, étuves par exemple), les fours ménagers à pyrolyse.

Un agent de renforcement, notamment une matière fibreuse, est traditionnellement incorporé à la charge afin d'améliorer la solidité du panneau et, dans certains cas, afin de réduire le retrait thermique à des températures élevées.

Notamment pour la fabrication de panneaux thermiquement isolants à haute température, un agent opacifiant, par exemple le dioxyde de titane, est également le plus souvent incorporé à la charge ; l'agent opacifiant réfléchit, absorbe et disperse le rayonnement thermique et constitue ainsi une barrière infra-rouge.

Le procédé habituel de préparation des panneaux consiste alors à mélanger la charge, éventuellement l'agent opacifiant, ces deux produits étant sous forme de poudre, et l'agent de renforcement, puis à introduire le mélange obtenu dans une enveloppe poreuse, qui est en général un sac ou un coussin en tissu de verre, et enfin à appliquer une pression à ladite enveloppe pour consolider la charge particulaire et lier les particules entre elles et donc conférer au panneau final certaines propriétés physico-mécaniques.

Cependant, les panneaux dans lesquels la charge est constituée de noir de carbone, de sulfate de calcium ou de carbonate de calcium ont des propriétés d'isolation thermique et phonique et des propriétés physico-mécaniques insuffisantes.

De plus, si les panneaux fabriqués, selon le procédé décrit précédemment, à partir d'une charge constituée de silice sous forme de poudre présentent des performances élevées au niveau de l'isolation thermique et phonique, leurs propriétés physico-mécaniques, en particulier leur résistance physico-mécanique, ne sont pas aussi satisfaisantes : ces panneaux ont une solidité limitée ; ils sont friables et enclins aux craquelures. De plus, les phases de mélange des matières premières, notamment des poudres, de fabrication des sacs ou des coussins en tissu de verre et de compression sont des phases coûteuses et souvent peu aisées à mettre en oeuvre.

Le but de l'invention est donc de fournir un panneau thermo-isolant et/ou insonorisant et des procédés d'obtention dudit panneau ne présentant pas les inconvénients susmentionnés.

Ainsi, l'un des objets de l'invention est un panneau d'isolation thermique, à basse et haute température, et/ou acoustique, présentant de bonnes propriétés physico-mécaniques, notamment une résistance physico-mécanique améliorée, tout en conservant des performances convenables en isolation thermique et/ou phonique.

Un autre objet de l'invention consiste en des procédés permettant d'obtenir les panneaux améliorés selon l'invention, procédés qui, de plus, comprennent des étapes faciles à mettre en oeuvre, peu coûteuses et dans lesquels une étape de compression n'est pas nécessaire.

D'autres caractéristiques et avantages de l'invention seront mieux compris à la lecture de la description et des exemples concrets mais non limitatifs qui vont suivre.

Le panneau d'isolation thermique et/ou acoustique selon l'invention est caractérisé en ce qu'il comprend un mélange séché :
- de silice de précipitation constituée par un gâteau de filtration issu de la réaction de précipitation et délité,
- d'au moins un agent de renforcement,
- éventuellement, d'au moins un agent opacifiant.

On entend par silice de précipitation toute silice obtenue par réaction d'un silicate avec un acide. Le mode de préparation de la silice peut être quelconque (notamment, addition d'acide sur un pied de cuve de silicate, addition simultanée totale ou partielle d'acide et de silicate sur un pied de cuve d'eau ou de solution de silicate).

Selon l'invention, la silice précipitée employée est constituée du gâteau de filtration issu de la réaction de précipitation et délité.

En d'autres termes, on réalise la précipitation de la silice, on obtient un gâteau de filtration qui est lavé si nécessaire. Ce gâteau est ensuite délité.

En général, on peut utiliser, dans le cadre de la présente invention, des silices de précipitation ayant une fois séchées une surface spécifique BET comprise entre 80 et 400 m²/g, de préférence entre 100 et 300 m²/g et une surface spécifique CTAB comprise entre 80 et 350 m²/g, de préférence entre 100 et 250 m²/g.

De préférence, les silices de précipitation employées sont relativement poreuses : elles présentent généralement une fois séchées un volume poreux total compris entre 1 et 5 cm³/g, de préférence entre 2 et 4 cm³/g.

Le gâteau de filtration présente habituellement un taux de matière sèche d'au moins 10 % en poids, de préférence compris entre 10 et 30 % en poids.

L'agent de renforcement contenu dans le panneau selon l'invention est de préférence constitué de fibres de renforcement, par exemple choisies dans le groupe formé par les fibres de silicate d'aluminium, les fibres d'alumine, les fibres de laine minérale, les fibres de verre, les fibres de quartz, les fibres céramiques, les fibres cellulosiques.

Les fibres de verres constituent un agent de renforcement préféré dans le cadre de la présente invention.

Selon un mode de réalisation de l'invention, le panneau thermo-isolant et/ou insonorisant comprend un mélange séché :
- de silice de précipitation constitué par un gâteau de filtration issu de la réaction de précipitation et délité, et
- d'au moins un agent de renforcement.

Ce panneau est plus particulièrement destiné à l'isolation thermique à basse température (par exemple entre 0 et 200°C), à l'isolation acoustique et, éventuellement, à une utilisation comme coupe-feu.

Ce panneau comprend, de préférence, 75 à 99 % en poids de silice sèche et 1 à 25 % en poids d'agent de renforcement, et, de manière encore plus préférée, 90 à 98,5% en poids de silice sèche et 1,5 à 10% en poids d'agent de renforcement.

On entend par silice sèche la silice de précipitation, constituée par le gâteau de filtration issu de la réaction de précipitation et délité, après séchage du mélange précité.

Selon un autre mode de réalisation de l'invention, le panneau thermo-isolant et/ou insonorisant comprend un mélange séché :
- de silice de précipitation constituée par un gâteau de filtration issu de la réaction de précipitation et délité,
- d'au moins un agent de renforcement, et
- d'au moins un agent opacifiant.

Ce panneau est plus particulièrement destiné à l'isolation thermique à haute température (par exemple jusqu'à au moins 750°C), même si son utilisation pour l'isolation acoustique est possible.

Ce panneau comprend alors généralement 45 à 90 % en poids de silice sèche, 9 à 50 % en poids d'agent opacifiant et 0,5 à 15 % en poids d'agent de renforcement, et, de préférence, 55 à 80 % en poids de silice sèche, 15 à 40 % en poids d'agent opacifiant et 1 à 10 % en poids d'agent de renforcement.

Une composition avantageuse dudit panneau est la suivante :
- 65 à 75 % en poids de silice sèche,
- 20 à 30 % en poids d'agent opacifiant,et
- 1 à 10 % en poids d'agent de renforcement.

L'agent opacifiant, qui constitue une barrière infra-rouge, est généralement choisi dans le groupe formé par l'oxyde de chrome, l'oxyde de zirconium, l'oxyde de fer, le dioxyde de titane, le dioxyde de manganèse, la poudre de quartz, le carbure de silicium, le carbure de bore, le carbure de tantale, le noir de carbone, le graphite.

Le dioxyde de titane, notamment sous forme minerai (par exemple l'ilménite), constitue un agent opacifiant préféré dans le cadre de la présente invention.

Généralement dans le but d'optimiser la tenue mécanique et la cohésion du panneau thermo-isolant et/ou insonorisant selon l'invention, le mélange à sécher pour former ledit panneau peut également contenir de la silice de précipitation sous forme de poudre (en plus de la silice de précipitation constituée par un gâteau de filtration issu de la réaction de précipitation et délité), ledit panneau comprenant alors en général 0 à 12 %, de préférence 1 à 10 %, en poids de ladite silice de précipitation sous forme de poudre. Au-delà de 12 %, le panneau est généralement enclin aux craquelures.

Cette silice de précipitation sous forme de poudre présente généralement une surface spécifique BET comprise entre 80 et 400 m²/g, de préférence entre 100 et 300 m²/g, une surface spécifique CTAB comprise entre 80 et 350 m²/g, de préférence entre 100 et 250 m²/g et un volume poreux total compris entre 1 et 5 cm³/g, de préférence entre 2 et 4 cm³/g.

Le panneau selon l'invention peut comprendre un mélange séché des constituants mentionnés précédemment (éventuellement au moins un agent opacifiant et/ou de la silice de précipitation sous forme de poudre) et, notamment dans le but d'améliorer la cohésion dudit panneau dans toutes ses conditions d'utilisation, d'une solution aqueuse de silicate de sodium à une teneur comprise en général entre 0 et 5 %, de préférence entre 0,5 et 3 %, calculée en poids de silicate sec par rapport au poids du panneau.

La solution de silicate de sodium éventuellement utilisée présente habituellement un taux de matière sèche compris entre 15 et 60 % en poids, par exemple entre 25 et 45 % en poids.

Les panneaux selon l'invention peuvent se présenter sous différentes formes ; en général, ils ont une configuration carrée ou, de préférence, rectangulaire, ainsi qu'une épaisseur variable.

Conformément à l'invention, les procédés d'obtention des panneaux décrits précédemment sont notamment caractérisés en ce qu'ils utilisent comme matière première un gâteau de filtration issu de la réaction de précipitation d'une silice, une telle utilisation constituant également l'un des objets de l'invention.

L'agent de renforcement peut être ajouté au gâteau de filtration avant le délitage, lors du délitage ou/et après le délitage. Il en est de même de l'agent opacifiant (dans le cas où l'on désire que le panneau final en contienne), que l'on peut ne pas ajouter au même stade que l'agent de renforcement.

Un premier mode de réalisation du procédé d'obtention d'un panneau selon l'invention est caractérisé en ce qu'il comprend les étapes suivantes :
1) on délite, en présence d'au moins un agent de renforcement et eventuellement d'au moins un agent opacifiant (donc en présence également de ce dernier quand on désire que le panneau final en contienne), un gâteau de filtration issu de la réaction de précipitation d'une silice; l'agent de renforcement peut ainsi être ajouté au gâteau de filtration avant le délitage ou lors du délitage ; il en est de même de l'éventuel agent opacifiant ;
2) on introduit la bouillie obtenue à l'issue de l'étape 1) dans un moule ;
3) on sèche la bouillie contenue dans ledit moule ;
4) éventuellement, on démoule le panneau obtenu à l'issue de l'étape 3).

Un deuxième mode de réalisation du procédé d'obtention d'un panneau selon l'invention est caractérisé en ce qu'il comprend les étapes suivantes :
1) on délite un gâteau de filtration issu de la réaction de précipitation d'une silice ;
2) on malaxe la bouillie obtenue à l'issue de l'étape 1) avec au moins un agent de renforcement et éventuellement au moins un agent opacifiant (donc avec également ce dernier quand on désire que le panneau final en contienne) ;
3) on introduit la bouillie obtenue à l'issue de l'étape 2) dans un moule ;
4) on sèche la bouillie contenue dans ledit moule ;
5) éventuellement, on démoule le panneau obtenu à l'issue de l'étape 4).

Un autre mode de réalisation du procédé d'obtention d'un panneau selon l'invention est caractérisé en ce qu'il comprend les étapes suivantes :
1) on délite, en présence d'au moins un agent de renforcement (respectivement au moins un agent opacifiant), un gâteau de filtration issu de la réaction de précipitation d'une silice ; ledit agent de renforcement (respectivement ledit agent opacifiant) peut ainsi être ajouté au gâteau de filtration avant le délitage ou lors du délitage ;
2) on malaxe la bouillie obtenue à l'issue de l'étape 1) avec au moins un agent opacifiant (respectivement au moins un agent de renforcement) ;
3) on introduit la bouillie obtenue à l'issue de l'étape 2) dans un moule ;
4) on sèche la bouillie contenue dans ledit moule ;
5) éventuellement, on démoule le panneau obtenu à l'issue de l'étape 4).

Lorsqu'elles sont utilisées, la silice de précipitation sous forme de poudre et/ou la solution aqueuse de silicate de sodium sont ajoutées lors d'une des étapes précédant l'étape d'introduction de la bouillie dans le moule.

Le séchage, qui présente le plus souvent un caractère essentiel, s'effectue avantageusement par paliers de température. La vitesse de séchage doit être de préférence assez lente afin, notamment, de ne pas provoquer de craquelure, ce qui pourrait entrainer une altération sensible des propriétés d'isolation du panneau final.

Ainsi, l'étape de séchage s'effectue préférentiellement par paliers de température successifs.

L'étape de séchage peut notamment être réalisée par les paliers de température successifs suivants :
a) un premier palier compris entre 30 et 80°C, de préférence entre 35 et 65°C, notamment entre 40 et 60°C, pendant 0,5 à 15 heures, de préférence 1 à 13 heures ;
b) un deuxième palier compris entre 90 et 200°C, de préférence entre 100 et 140°C, notamment entre 110 et 130°C, pendant 0,5 à 15 heures, de préférence 1 à 13 heures ;
c) éventuellement, un troisième palier compris entre 450 et 850°C, de préférence entre 600 et 800°C, pendant 2 à 140 minutes, de préférence 5 à 130 minutes, par exemple 5 à 20 minutes.

L'étape de séchage peut également être réalisée par les paliers de température successifs suivants :
a) un premier palier compris entre 30 et 60°C, de préférence entre 40 et 55°C, pendant 0,5 à 15 heures, de préférence 1 à 13 heures ;
b) un deuxième palier compris entre 60 et 80°C, de préférence entre 65 et 75°C, pendant 0,5 à 15 heures, de préférence 1 à 13 heures ;
c) un troisième palier compris entre 90 et 115°C, de préférence entre 95 et 105°C, pendant 0,5 à 15 heures, de préférence 1 à 13 heures ;
d) un quatrième palier compris entre 115 et 200°C, de préférence entre 120 et 140°C, pendant 0,5 à 15 heures, de préférence entre 1 à 13 heures ;
e) éventuellement, un cinquième palier compris entre 450 et 850°C, de préférence entre 600 et 800°C, pendant 2 à 140 minutes, de préférence 5 à 130 minutes, notamment 5 à 20 minutes.

De préférence, l'étape de séchage comprend le dernier palier entre 450 et 850°C, car il permet notamment de limiter encore plus la reprise en eau du panneau final.

En général, préalablement à l'étape de séchage, le moule contenant la bouillie est soumis à des vibrations.

La forme et l'épaisseur du moule dépendent de celles souhaitées pour le panneau que l'on veut obtenir ; le moule présente habituellement une configuration carrée ou, de préférence, rectangulaire.

Le moulage peut être effectué en continu ou en discontinu.

Les exemples suivants illustrent l'invention sans toutefois en limiter la portée.

### EXEMPLE 1 Préparation d'un panneau selon l'invention

On délite un gâteau de filtration, ayant un taux de matière sèche de 21 % en poids, issu de la réaction de précipitation d'une silice, cette silice présentant une surface spécifique BET de 170 m²/g, une surface spécifique CTAB de 160 m²/g et un volume poreux total de 2,5 cm³/g.

On malaxe ensuite 1,5 kg dudit gâteau délité avec 7 g de fibres de verre (de 14 mm de long).

On introduit la bouillie obtenue après malaxage dans un moule parallélépipèdique de dimensions 100 x 70 x 10 (mm).

Puis on sèche la bouillie contenue dans le moule selon les paliers de température successifs suivants :
- à 50°C pendant 2,5 heures,
- à 70°C pendant 12 heures,
- à 100°C pendant 12 heures,
- à 130°C pendant 2 heures,
- à 750°C pendant 2 heures.

On démoule enfin le panneau obtenu à l'issue du séchage.

Ce panneau contient 98 % en poids de silice sèche et 2 % en poids de fibres de verre. Sa densité est de 0,325.

### EXEMPLE 2 Préparation d'un panneau selon l'invention

On délite un gâteau de filtration, ayant un taux de matière sèche de 23 % en poids, issu de la réaction de précipitation d'une silice, cette silice présentant une surface spécifique BET de 180 m²/g, une surface spécifique CTAB de 170 m²/g et un volume poreux total de 2,4 cm³/g.

On malaxe ensuite 1 kg dudit gâteau délité avec 60 g de minerai de dioxyde de titane (ilménite) et 14 g de fibres de verre (de 14 mm de long).

On introduit la bouillie obtenue après malaxage dans un moule parallélépipèdique de dimensions 100 x 70 x 10 (mm).

Puis on sèche la bouillie contenue dans le moule selon les paliers de température successifs suivants :
- à 50°C pendant 2,5 heures,
- à 70°C pendant 12 heures,
- à 100°C pendant 12 heures,
- à 130°C pendant 2 heures,
- à 750°C pendant 2 heures.

On démoule enfin le panneau obtenu à l'issue du séchage.

Ce panneau contient 75 % en poids de silice sèche, 20 % en poids de dioxyde de titane et 5 % en poids de fibres de verre. Sa densité est de 0,450.

### EXEMPLE 3 Préparation d'un panneau selon l'invention

On délite un gâteau de filtration, ayant un taux de matière sèche de 21 % en poids, issu de la réaction de précipitation d'une silice, cette silice présentant une surface spécifique BET de 170 m²/g, une surface spécifique CTAB de 160 m²/g et un volume poreux total de 2,5 cm³/g.

On malaxe ensuite 2 kg dudit gâteau délité avec 136 g de minerai de dioxyde de titane (ilménite) et 12 g de fibres de verre (de 14 mm de long).

On introduit la bouillie obtenue après malaxage dans un moule parallélépipèdique de dimensions 100 x 70 x 10 (mm).

Puis on sèche la bouillie contenue dans le moule selon les paliers de température successifs suivants :
- à 50°C pendant 2,5 heures,
- à 70°C pendant 12 heures,
- à 100°C pendant 12 heures,
- à 130°C pendant 2 heures,
- à 750°C pendant 2 heures.

On démoule enfin le panneau obtenu à l'issue du séchage.

Ce panneau contient 74 % en poids de silice sèche, 24 % en poids de dioxyde de titane et 2 % en poids de fibres de verre. Sa densité est de 0,445.

### EXEMPLE 4 Préparation d'un panneau selon l'invention

On délite un gâteau de filtration, ayant un taux de matière sèche de 21 % en poids, issu de la réaction de précipitation d'une silice, cette silice présentant une surface spécifique BET de 170 m²/g, une surface spécifique CTAB de 160 m²/g et un volume poreux total de 2,5 cm³/g.

On malaxe ensuite 2 kg dudit gâteau délité avec 107 g de minerai de dioxyde de titane (ilménite), 30 g de fibres de verre (de 14 mm de long) et 52 g de silice de précipitation sous forme de poudre ; ladite silice présente une surface spécifique BET de 180 m²/g, une surface spécifique CTAB de 170 m²/g et un volume poreux total de 2,4 cm³/g.

On introduit la bouillie obtenue après malaxage dans un moule parallélépipèdique de dimensions 100 x 70 x 10 (mm).

Puis on sèche la bouillie contenue dans le moule selon les paliers de température successifs suivants :
- a 50°C pendant 2,5 heures,
- a 70°C pendant 12 heures,
- à 100°C pendant 12 heures,
- à 130°C pendant 2 heures,
- à 750°C pendant 2 heures.

On démoule enfin le panneau obtenu à l'issue du séchage.

Ce panneau contient 69 % en poids de silice sèche (ex-gâteau), 17,5 % en poids de dioxyde de titane, 8,5 % en poids de silice (ex-poudre) et 5 % en poids de fibres de verre. Sa densité est de 0,470.

### EXEMPLE 5 Préparation d'un panneau selon l'invention

On délite un gâteau de filtration, ayant un taux de matière sèche de 21 % en poids, issu de la réaction de précipitation d'une silice, cette silice présentant une surface spécifique BET de 170 m²/g, une surface spécifique CTAB de 160 m²/g et un volume poreux total de 2,5 cm³/g.

On malaxe ensuite 2 kg dudit gâteau délité avec 105 g de minerai de dioxyde de titane (ilménite), 31 g de fibres de verre (de 14 mm de long), 53 g de silice de précipitation sous forme de poudre (ladite silice présentant une surface spécifique BET de 180 m²/g, une surface spécifique CTAB de 170 m²/g et un volume poreux total de 2,4 cm³/g) et 26 g d'une solution aqueuse de silicate de sodium ayant un taux de matière sèche de 35 % en poids.

On introduit la bouillie obtenue après malaxage dans un moule parallélépipèdique de dimensions 100 x 70 x 10 (mm).

Puis on sèche la bouillie contenue dans le moule selon les paliers de température successifs suivants :
- à 50°C pendant 2,5 heures,
- à 70°C pendant 12 heures,
- à 100°C pendant 12 heures,
- à 130°C pendant 2 heures,
- à 750°C pendant 2 heures.

On démoule enfin le panneau obtenu à l'issue du séchage.

Ce panneau contient 68 % en poids de silice sèche (ex-gâteau), 17 % en poids de dioxyde de titane, 8,5 % en poids de silice (ex-poudre), 5 % en poids de fibres de verre et 1,5 % en poids de silicate de sodium sec. Sa densité est de 0,470.

## Revendications

1. Panneau d'isolation thermique et/ou acoustique caractérisé en ce qu'il comprend un mélange séché :
- de silice de précipitation constituée par un gâteau de filtration issu de la réaction de précipitation et délité, et
- d'au moins un agent de renforcement.

2. Panneau selon la revendication 1 caractérisé en ce que ladite silice de précipitation présente, un fois séchée, une surface spécifique BET comprise entre 80 et 400 m²/g.

3. Panneau selon l'une des revendications 1 et 2 caractérisé en ce que ladite silice de précipitation présente, une fois séchée, une surface spécifique CTAB comprise entre 80 et 350 m²/g.

4. Panneau selon l'une des revendications 1 à 3 caractérisé en ce que ladite silice de précipitation présente, une fois séchée, un volume poreux total compris entre 1 et 5 cm³/g.

5. Panneau selon l'une des revendications 1 à 4 caractérisé en ce que ledit gâteau de filtration présente un taux de matière sèche d'au moins 10 % en poids.

6. Panneau selon la revendication 5 caractérisé en ce que ledit gâteau de filtration présente un taux de matière sèche compris entre 10 et 30 % en poids.

7. Panneau selon l'une des revendications 1 à 6 caractérisé en ce que l'agent de renforcement est constitué de fibres de renforcement.

8. Panneau selon la revendication 7 caractérisé en ce que l'agent de renforcement est constitué de fibres de renforcement choisies dans le groupe formé par les fibres de silicate d'aluminium, les fibres d'alumine, les fibres de laine minérale, les fibres de verre, les fibres de quartz, les fibres céramiques, les fibres cellulosiques.

9. Panneau selon la revendication 7 caractérisé en ce que l'agent de renforcement est constitué de fibres de verre.

10. Panneau selon l'une des revendications 1 à 9 caractérisé en ce qu'il comprend :
- 75 à 99 % en poids de silice sèche, et
- 1 à 25 % en poids d'agent de renforcement.

11. Panneau selon l'une des revendications 1 à 9 caractérisé en ce qu'il comprend :
- 90 à 98,5 % en poids de silice sèche, et
- 1,5 à 10 % en poids d'agent de renforcement.

12. Panneau selon l'une des revendications 1 à 9 caractérisé en ce que ledit mélange comprend en outre au moins un agent opacifiant.

13. Panneau selon la revendication 12 caractérisé en ce que l'agent opacifiant est choisi dans le groupe formé par l'oxyde de chrome, l'oxyde de zirconium, l'oxyde de fer, le dioxyde de titane, le dioxyde de manganèse, l'ilménite, la poudre de quartz, le carbure de silicium, le carbure de bore, le carbure de tantalum, le noir de carbone, le graphite.

14. Panneau selon la revendication 12 caractérisé en ce que l'agent opacifiant est le dioxyde de titane.

15. Panneau selon l'une des revendications 12 à 14 caractérisé en ce qu'il comprend :
- 45 à 90 % en poids de silice sèche,
- 9 à 50 % en poids d'agent opacifiant, et
- 0,5 à 15 % en poids d'agent de renforcement.

16. Panneau selon l'une des revendications 12 à 14 caractérisé en ce qu'il comprend :
- 55 à 80 % en poids de silice sèche,
- 15 à 40 % en poids d'agent opacifiant, et
- 1 à 10 % en poids d'agent de renforcement.

17. Panneau selon l'une des revendications 12 à 14 caractérisé en ce qu'il comprend :
- 65 à 75 % en poids de silice sèche,
- 20 à 30 % en poids d'agent opacifiant, et
- 1 à 10 % en poids d'agent de renforcement.

18. Panneau selon l'une des revendications 1 à 10 et 12 à 17 caractérisé en ce qu'il comprend un mélange séché :
- de silice de précipitation constituée par un gâteau de filtration issu de la réaction de précipitation et délité,
- d'au moins un agent de renforcement,
- éventuellement d'au moins un agent opacifiant, et
- de silice de précipitation sous forme de poudre, ladite silice de précipitation sous forme de poudre étant présente dans ledit panneau à une teneur comprise entre 0 et 12 % en poids.

19. Panneau selon l'une des revendications 1 à 10, 12 à 16 et 18 caractérisé en ce qu'il comprend un mélange séché :
- de silice de précipitation constituée par un gâteau de filtration issu de la réaction de précipitation et délité,
- d'au moins un agent de renforcement,
- éventuellement d'au moins un agent opacifiant,
- éventuellement de silice de précipitation sous forme de poudre, et
- de silicate de sodium liquide,
ladite silice de précipitation sous forme de poudre étant présente dans ledit panneau à une teneur comprise entre 0 et 12 % en poids, ledit panneau ayant une teneur en silicate de sodium sec comprise entre 0 et 5 % en poids.

20. Procédé d'obtention d'un panneau selon l'une des revendications 1 à 17 caractérisé en ce qu'il comprend les étapes suivantes :
1) on délite, en présence d'au moins un agent de renforcement et éventuellement d'au moins un agent opacifiant, un gâteau de filtration issu de la réaction de précipitation d'une silice,
2) on introduit la bouillie obtenue à l'issue de l'étape 1) dans un moule,
3) on sèche la bouillie contenue dans ledit moule,
4) éventuellement, on démoule le panneau obtenu à l'issue de l'étape 3).

21. Procédé selon la revendication 20 caractérisé en ce que ledit agent de renforcement est ajouté audit gâteau de filtration avant le délitage ou lors du délitage et en ce que, éventuellement, ledit agent opacifiant est ajouté audit gâteau de filtration avant le délitage ou lors du délitage.

22. Procédé d'obtention d'un panneau selon l'une des revendications 1 à 17 caractérisé en ce qu'il comprend les étapes suivantes :
1) on délite un gâteau de filtration issu de la réaction de précipitation d'une silice,
2) on malaxe la bouillie obtenue à l'issue de l'étape 1) avec au moins un agent de renforcement et éventuellement au moins un agent opacifiant,
3) on introduit la bouillie obtenue à l'issue de l'étape 2) dans un moule,
4) on sèche la bouillie contenue dans ledit moule,
5) éventuellement, on démoule le panneau obtenu à l'issue de l'étape 4).

23. Procédé d'obtention d'un panneau selon l'une des revendicatios 12 à 17 caractérisé en ce qu'il comprend les étapes suivantes :
1) on délite, en présence d'au moins un agent de renforcement, un gâteau de filtration issu de la réaction de précipitation d'une silice,
2) on malaxe la bouillie obtenue à l'issue de l'étape 1) avec au moins un agent opacifiant,
3) on introduit la bouillie obtenue à l'issue de l'étape 2) dans un moule,
4) on sèche la bouillie contenue dans ledit moule,
5) éventuellement, on démoule le panneau obtenu à l'issue de l'étape 4).

24. Procédé selon la revendication 23 caractérisé en ce que ledit agent de renforcement est ajouté audit gâteau de filtration avant le délitage ou lors du délitage.

25. Procédé d'obtention d'un panneau selon l'une des revendications 12 à 17 caractérisé en ce qu'il comprend les étapes suivantes :
1) on délite, en présence d'au moins un agent opacifiant, un gâteau de filtration issu de la réaction de précipitation d'une silice,
2) on malaxe la bouillie obtenue à l'issue de l'étape 1) avec au moins un agent de renforcement,
3) on introduit la bouillie obtenue à l'issue de l'étape 2) dans un moule,
4) on sèche la bouillie contenue dans ledit moule,
5) éventuellement, on démoule le panneau obtenu à l'issue de l'étape 4).

26. Procédé selon la revendication 25 caractérisé en ce que ledit agent opacifiant est ajouté au gâteau de filtration avant le délitage ou lors du délitage.

27. Procédé d'obtention d'un panneau selon l'une des revendications 18 et 19 caractérisé en ce que de la silice de précipitation sous forme de poudre et/ou une solution aqueuse de silicate de sodium sont ajoutées lors d'une des étapes précédant l'étape d'introduction de la bouillie dans le moule.

28. Procédé selon l'une des revendications 20 à 27 caractérisé en ce que l'étape de séchage s'effectue par paliers de température.

29. Procédé selon la revendication 28 caratérisé en ce que les paliers de température successifs de l'étape de séchage sont les suivants :
a) un premier palier compris entre 30 et 80°C, pendant 0,5 à 15 heures,
b) un deuxième palier compris entre 90 et 200°C, pendant 0,5 à 15 heures,
c) éventuellement, un troisième palier compris entre 450 et 850°C, pendant 2 à 140 minutes.

30. Procédé selon la revendication 28 caractérisé en ce que les paliers de température successifs de l'étape de séchage sont les suivants :
a) un premier palier compris entre 30 et 60°C, pendant 0,5 à 15 heures,
b) un deuxième palier compris entre 60 et 80°C, pendant 0,5 à15 heures,
c) un troisième palier compris entre 90 et 115°C, pendant 0,5 à 15 heures,
d) un quatrième palier compris entre 115 et 200°C, pendant 0,5 à 15 heures,
e) éventuellement, un cinquième palier compris entre 450 et 850°C, pendant 2 à 140 minutes.

31. Procédé selon l'une des revendications 20 à 30 caractérisé en ce que, préalablement à l'étape de séchage, le moule contenant la bouillie est soumis à des vibrations.

32. Procédé selon l'une des revendications 20 à 31 caractérisé en ce que le moule présente une configuration carrée ou rectangulaire.

33. Utilisation d'un panneau selon l'une des revendications 1 à 11, 18 et 19 comme coupe-feu.

34. Utilisation d'un gâteau de filtration issu de la réaction de précipitation d'une silice comme matière première pour l'obtention d'un panneau d'isolation thermique et/ou acoustique.

## Claims

1. A heat and/or sound insulation panel, characterized in that it comprises a dried mixture:
• of a precipitated silica constituted by a filter cake originating from the precipitation reaction and disintegrated; and
• at least one reinforcing agent.

2. A panel according to claim 1, characterized in that said precipitated silica, when dried, has a BET specific surface area in the range 80 to 400 m²/g.

3. A panel according to claim 1 or claim 2, characterized in that said precipitated silica, when dried, has a CTAB specific surface area in the range 80 to 350 m²/g.

4. A panel according to any one of claims 1 to 3, characterized in that said precipitated silica, when dried, has a total pore volume in the range 1 to 5 cm³/g

5. A panel according to any one of claims 1 to 4, characterized in that said filter cake has a dry matter content of at least 10% by weight.

6. A panel according to claim 5, characterized in that said filter cake has a dry matter content in the range 10% to 30% by weight.

7. A panel according to any one of claims 1 to 6, characterized in that the reinforcing agent is constituted by reinforcing fibres.

8. A panel according to claim 7, characterized in that the reinforcing agent is constituted by reinforcing fibres selected from the group formed by aluminium silicate fibres, alumina fibres, mineral wool fibres, glass fibres, quartz fibres, ceramic fibres, or cellulosic fibres.

9. A panel according to claim 7, characterized in that the reinforcing agent is constituted by glass fibres.

10. A panel according to any one of claims 1 to 9, characterized in that it comprises:
• 75% to 99% by weight of dry silica; and
• 1% to 25% by weight of reinforcing agent.

11. A panel according to any one of claims 1 to 9, characterized in that it comprises:
• 90% to 98.5% by weight of dry silica; and
• 1.5% to 10% by weight of reinforcing agent.

12. A panel according to any one of claims 1 to 9, characterized in that said mixture further comprises at least one opacifier.

13. A panel according to claim 12, characterized in that the opacifier is selected from the group formed by chromium oxide, zirconium oxide, iron oxide, titanium oxide, manganese dioxide, ilmenite, quartz powder, silicon carbide, boron carbide, tantalum carbide, carbon black, graphite.

14. A panel according to claim 12, characterized in that the opacifier is titanium dioxide.

15. A panel according to any one of claims 12 to 14, characterized in that it comprises:
• 45% to 90% by weight of dry silica;
• 9% to 50% by weight of opacifier; and
• 0.5% to 50% by weight of reinforcing agent.

16. A panel according to any one of claims 12 to 14, characterized in that it comprises:
• 55% to 80% by weight of dry silica;
• 15% to 40% by weight of opacifier; and
• 1% to 10% by weight of reinforcing agent.

17. A panel according to any one of claims 12 to 14, characterized in that it comprises:
• 65% to 75% by weight of dry silica;
• 20% to 30% by weight of opacifier; and
• 1% to 10% by weight of reinforcing agent.

18. A panel according to any one of claim 1 to 10 and 12 to 17, characterized in that it comprises a dry mixture:
• of precipitated silica constituted by a filter cake originating from the precipitation reaction and disintegrated;
• at least one reinforcing agent;
• optionally, at least one opacifier; and
• precipitated silica in the form of a powder;
said precipitated silica in the form of a powder being present in said panel in an amount which is in the range 0 to 12% by weight.

19. A panel according to any one of claims 1 to 10, 12 to 16 and 18, characterized in that it comprises a dry mixture:
• of precipitated silica constituted by a filter cake originating from the precipitation reaction and disintegrated;
• at least one reinforcing agent;
• optionally, of at least one opacifier;
• optionally, precipitated silica in the form of a powder; and
• liquid sodium silicate;
said precipitated silica in the form of a powder being present in said panel in an amount which is in the range 0 to 12% by weight, said panel having a dry sodium silicate content which is in the range 0 to 5% by weight.

20. A process for the production of a panel according to any one of claims 1 to 17, characterized in that it comprises the following steps:
1) disintegrating a filter cake from the silica precipitation reaction in the presence of at least one reinforcing agent and optionally at least one opacifier;
2) introducing the slurry obtained from step 1) into a mould;
3) drying the slurry contained in said mould;
4) optionally, unmoulding the panel obtained from step 3).

21. A process according to claim 20, characterized in that said reinforcing agent is added to said filter cake before disintegration or during disintegration and in that, optionally, said opacifier is added to said filter cake before disintegration or during disintegration.

22. A process for the production of a panel according to any one of claims 1 to 17, characterized in that it comprises the following steps:
1) disintegrating a filter cake from the silica precipitation reaction;
2) grinding the slurry obtained from step 1) with at least one reinforcing agent and optionally at least one opacifier;
3) introducing the slurry obtained from step 2) into a mould;
4) drying the slurry contained in said mould;
5) optionally, unmoulding the panel obtained from step 4).

23. A process for the production of a panel according to any one of claims 12 to 17, characterized in that it comprises the following steps:
1) disintegrating a filter cake from the silica precipitation reaction in the presence of at least one reinforcing agent;
2) grinding the slurry obtained from step 1) with at least one opacifier;
3) introducing the slurry obtained from step 2) into a mould;
4) drying the slurry contained in said mould;
5) optionally, unmoulding the panel obtained from step 4).

24. A process according to claim 23, characterized in that said reinforcing agent is added to said filter cake before disintegration or during disintegration.

25. A process for the production of a panel according to any one of claims 12 to 17, characterized in that it comprises the following steps:
1) disintegrating a filter cake from the silica precipitation reaction in the presence of at least one opacifier;
2) grinding the slurry obtained from step 1) with at least one reinforcing agent;
3) introducing the slurry obtained from step 2) into a mould;
4) drying the slurry contained in said mould;
5) optionally, unmoulding the panel obtained from step 4).

26. A process according to claim 25, characterized in that said opacifier is added to the filter cake before disintegration or after disintegration.

27. A process for the production of a panel according to claim 18 or claim 19, characterized in that the precipitated silica in the form of a powder and/or an aqueous sodium silicate solution is/are added during one of the steps preceding the step for introducing slurry into the mould.

28. A process according to any one of claims 20 to 27, characterized in that the drying step is carried out in temperature stages.

29. A process according to claim 28, characterized in that the successive temperature stages in the drying step are as follows:
a) a first stage in the range 30°C to 80°C, for 0.5 to 15 hours;
b) a second stage in the range 90°C to 200°C, for 0.5 to 15 hours;
c) an optional third stage in the range 450°C to 850°C for 2 to 140 minutes.

30. A process according to claim 28, characterized in that the successive temperature stages in the drying step are as follows:
a) a first stage in the range 30°C to 60°C, for 0.5 to 15 hours;
b) a second stage in the range 60°C to 80°C, for 0.5 to 15 hours;
c) a third stage in the range 90°C to 115°C, for 0.5 to 15 hours;
d) a fourth stage in the range 115°C to 200°C, for 0.5 to 15 hours;
e) an optional fifth stage in the range 450°C to 850°C for 2 to 140 minutes.

31. A process according to any one of claims 20 to 30 characterized in that, prior to the drying step, the mould containing the slurry is vibrated.

32. A process according to any one of claims 20 to 31, characterized in that the mould has a square or rectangular configuration.

33. Use of a panel according to any one of claims 1 to 11, 18 and 19, as a fire barrier.

34. Use of a filter cake from precipitation of a silica as a basic material for the production of a heat and/or sound insulation panel.

## Patentansprüche

1. Wärmedämm- und/oder Schallschluckplatte, dadurch gekennzeichnet, daß sie eine getrocknete Mischung umfaßt von:
- präzipitierter Kieselerde oder Kieselhydrogel, gebildet durch einen aus der Präzipitationsreaktion stammenden und fragmentierten Filterkuchen, und
- mindestens einem Verstärkungsmaterial.

2. Platte nach Anspruch 1, dadurch gekennzeichnet, daß die präzipitierte Kieselerde oder das Kieselhydrogel, wenn sie bzw. es einmal getrocknet worden ist, eine spezifische BET-Oberfläche zwischen 80 und 400 m²/g aufweist.

3. Platte nach einem der Ansprüche 1 und 2, dadurch gekennzeichnet, daß die präzipitierte Kieselerde oder das Kieselhydrogel, wenn sie bzw. es einmal getrocknet worden ist, eine spezifische CTAB-Oberfläche zwischen 80 und 350 m²/g aufweist.

4. Platte nach einem der Ansprüche 1 bis 3, dadurch gekennzeichnet, daß die präzipitierte Kieselerde oder das Kieselhydrogel, wenn sie bzw. es einmal getrocknet worden ist, ein Gesamtporenvolumen zwischen 1 und 5 cm³/g aufweist.

5. Platte nach einem der Ansprüche 1 bis 4, dadurch gekennzeichnet, daß der Filterkuchen einen Gehalt an Trockensubstanz von mindestens 10 Gew.-% aufweist.

6. Platte nach Anspruch 5, dadurch gekennzeichnet, daß der Filterkuchen einen Gehalt an Trockensubstanz zwischen 10 und 30 Gew.-% aufweist.

7. Platte nach einem der Ansprüche 1 bis 6, dadurch gekennzeichnet, daß das Verstärkungsmaterial durch Verstärkungsfasern gebildet wird.

8. Platte nach Anspruch 7, dadurch gekennzeichnet, daß das Verstärkungsmaterial durch Verstärkungsfasern gebildet wird, die ausgewählt werden aus der Gruppe, gebildet durch Aluminiumsilicatfasern, Aluminiumoxidfasern, Mineralwollefasern, Glasfasern, Quarzfasern, keramische Fasern, Cellulosefasern.

9. Platte nach Anspruch 7, dadurch gekennzeichnet, daß das Verstärkungsmaterial aus Glasfasern gebildet wird.

10. Platte nach einem der Ansprüche 1 bis 9, dadurch gekennzeichnet, daß sie umfaßt:
- 75 bis 99 Gew.-% trockene Kieselerde und
- 1 bis 25 Gew.-% Verstärkungsmaterial.

11. Platte nach einem der Ansprüche 1 bis 9, dadurch gekennzeichnet, daß sie umfaßt:
- 90 bis 98,5 Gew.-% trockene Kieselerde und
- 1,5 bis 10 Gew.-% Verstärkungsmaterial.

12. Platte nach einem der Ansprüche 1 bis 9, dadurch gekennzeichnet, daß die Mischung darüberhinaus mindestens ein Trübungsmittel umfaßt.

13. Platte nach Anspruch 12, dadurch gekennzeichnet, daß das Trübungsmittel ausgewählt wird aus der Gruppe, gebildet aus Chromoxid, Zirconiumoxid, Eisenoxid, Titandioxid, Mangandioxid, Ilmenit, Quarzpulver, Siliciumcarbid, Borcarbid, Tantalcarbid, Ruß, Graphit.

14. Platte nach Anspruch 12, dadurch gekennzeichnet, daß das Trübungsmittel Titandioxid ist.

15. Platte nach einem der Ansprüche 12 bis 14, dadurch gekennzeichnet, daß sie umfaßt:
- 45 bis 90 Gew.-% trockene Kieselerde,
- 9 bis 50 Gew.-% Trübungsmittel und
- 0,5 bis 15 Gew.-% Verstärkungsmaterial.

16. Platte nach einem der Ansprüche 12 bis 14, dadurch gekennzeichnet, daß sie umfaßt:
- 55 bis 80 Gew.-% trockene Kieselerde,
- 15 bis 40 Gew.-% Trübungsmittel und
- 1 bis 10 Gew.-% Verstärkungsmaterial.

17. Platte nach einem der Ansprüche 12 bis 14, dadurch gekennzeichnet, daß sie umfaßt:
- 65 bis 75 Gew.-% trockene Kieselerde,
- 20 bis 30 Gew.-% Trübungsmittel und
- 1 bis 10 Gew.-% Verstärkungsmaterial.

18. Platte nach einem der Ansprüche 1 bis 10 und 12 bis 17, dadurch gekennzeichnet, daß sie eine getrocknete Mischung umfaßt von:
- präzipitierter Kieselerde oder Kieselhydrogel, gebildet durch einen aus der Präzipitationsreaktion stammenden und fragmentierten Filterkuchen,
- mindestens einem Verstärkungsmaterial,
- gegebenenfalls mindestens einem Trübungsmittel und
- präzipitierter Kieselerde oder Kieselhydrogel in Pulverform,
wobei die präzipitierte Kieselerde oder das Kieselhydrogel in Pulverform in der Platte in einem Gehalt zwischen 0 und 12 Gew.-% vorliegt.

19. Platte nach einem der Ansprüche 1 bis 10, 12 bis 16 und 18, dadurch gekennzeichnet, daß sie eine getrocknete Mischung umfaßt von:
- präzipitierter Kieselerde oder Kieselhydrogel, gebildet durch einen aus der Präzipitationsreaktion stammenden und fragmentierten Filterkuchen,
- mindestens einem Verstärkungsmaterial,
- gegebenenfalls mindestens einem Trübungsmittel,
- gegebenenfalls präzipitierter Kieselerde oder Kieselhydrogel in Pulverform und
- flüssigem Natriumsilicat,
wobei die präzipitierte Kieselerde oder das Kieselhydrogel in Pulverform in der Platte in einem Gehalt zwischen 0 und 12 Gew.-% vorliegt und die Platte einen Gehalt an trockenem Natriumsilicat zwischen 0 und 5 Gew.-% aufweist.

20. Verfahren zur Herstellung einer Platte nach einem der Ansprüche 1 bis 17, dadurch gekennzeichnet, daß es die folgenden Stufen umfaßt:
1) man fragmentiert in Gegenwart von mindestens einem Verstärkungsmaterial und gegebenenfalls von mindestens einem Trübungsmittel einen aus der Umsetzung zur Präzipitation einer Kieselerde stammenden Filterkuchen,
2) man füllt den am Ende der Stufe 1) erhaltenen Schlamm in eine Form ein,
3) man trocknet den in der Form enthaltenen Schlamm,
4) man entfernt gegebenenfalls die am Ende der Stufe 3) erhaltene Platte aus der Form.

21. Verfahren nach Anspruch 20, dadurch gekennzeichnet, daß das Verstärkungsmaterial dem Filterkuchen vor der Fragmentierung oder während der Fragmentierung zugesetzt wird und daß gegebenenfalls das Trübungsmittel dem Filterkuchen vor der Fragmentierung oder während der Fragmentierung zugesetzt wird.

22. Verfahren zur Herstellung einer Platte nach einem der Ansprüche 1 bis 17, dadurch gekennzeichnet, daß es die folgenden Stufen umfaßt:
1) man fragmentiert einen aus der Umsetzung zur Präzipitation einer Kieselerde stammenden Filterkuchen,
2) man mischt durch kneten den am Ende der Stufe 1) erhaltenen Schlamm mit mindestens einem Verstärkungsmaterial und gegebenenfalls mindestens einem Trübungsmittel,
3) man füllt den am Ende der Stufe 2) erhaltenen Schlamm in eine Form ein,
4) man trocknet den in der Form enthaltenen Schlamm,
5) man entfernt gegebenenfalls die am Ende der Stufe 4) erhaltene Platte aus der Form.

23. Verfahren zur Herstellung einer Platte nach einem der Ansprüche 12 bis 17, dadurch gekennzeichnet, daß es die folgenden Stufen umfaßt:
1) man fragmentiert in Gegenwart von mindestens einem Verstärkungsmaterial einen aus der Umsetzung zur Präzipitation einer Kieselerde stammenden Filterkuchen,
2) man mischt durch Kneten den am Ende der Stufe 1) erhaltenen Schlamm mit mindestens einem Trübungsmittel,
3) man füllt den am Ende der Stufe 2) erhaltenen Schlamm in eine Form ein,
4) man trocknet den in der Form enthaltenen Schlamm,
5) man entfernt gegebenenfalls die am Ende der Stufe 4) erhaltene Platte aus der Form.

24. Verfahren nach Anspruch 23, dadurch gekennzeichnet, daß das Verstärkungsmaterial dem Filterkuchen vor der Fragmentierung oder während der Fragmentierung zugesetzt wird.

25. Verfahren zur Herstellung einer Platte nach einem der Ansprüche 12 bis 17, dadurch gekennzeichnet, daß es die folgenden Stufen umfaßt:
1) man fragmentiert in Gegenwart von mindestens einem Trübungsmittel einen aus der Umsetzung zur Präzipitation einer Kieselerde stammenden Filterkuchen,
2) man mischt durch Kneten den am Ende der Stufe 1) erhaltenen Schlamm mit mindestens einem Verstärkungsmaterial,
3) man füllt den am Ende der Stufe 2) erhaltenen Schlamm in eine Form ein,
4) man trocknet den in der Form enthaltenen Schlamm,
5) man entfernt gegebenenfalls die am Ende der Stufe 4) erhaltene Platte aus der Form.

26. Verfahren nach Anspruch 25, dadurch gekennzeichnet, daß das Trübungsmittel dem Filterkuchen vor der Fragmentierung oder während der Fragmentierung zugesetzt wird.

27. Verfahren zur Herstellung einer Platte nach einem der Ansprüche 18 und 19, dadurch gekennzeichnet, daß präzipitierte Kieselerde oder Kieselhydrogel in Pulverform und/oder eine wäßrige Lösung von Natriumsilicat während einer der Stufen, die der Stufe des Einfüllens des Schlamms in die Form vorangehen, zugesetzt wird.

28. Verfahren nach einem der Ansprüche 20 bis 27, dadurch gekennzeichnet, daß die Trocknungsstufe mittels Temperaturstufen erfolgt.

29. Verfahren nach Anspruch 28, dadurch gekennzeichnet, daß die aufeinanderfolgenden Temperaturstufen der Trocknungsstufe die Folgenden sind:
a) eine erste Stufe zwischen 30 und 80°C während 0,5 bis 15 h,
b) eine zweite Stufe zwischen 90 und 200°C während 0,5 bis 15 h,
c) gegebenenfalls eine dritte Stufe zwischen 450 und 850°C während 2 bis 140 min.

30. Verfahren nach Anspruch 28, dadurch gekennzeichnet, daß die aufeinanderfolgenden Temperaturstufen der Trocknungsstufe die Folgenden sind:
a) eine erste Stufe zwischen 30 und 60°C während 0,5 bis 15 h,
b) eine zweite Stufe zwischen 60 und 80°C während 0,5 bis 15 h,
c) eine dritte Stufe zwischen 90 und 115°C während 0,5 bis 15 h,
d) eine vierte Stufe zwischen 115 und 200°C während 0,5 bis 15 h,
e) gegebenenfalls eine fünfte Stufe zwischen 450 und 850°C während 2 bis 140 min.

31. Verfahren nach einem der Ansprüche 20 bis 30, dadurch gekennzeichnet, daß die den Schlamm enthaltende Form vor der Trocknungsstufe Erschütterungen unterworfen wird.

32. Verfahren nach einem der Ansprüche 20 bis 31, dadurch gekennzeichnet, daß die Form eine quadratische oder rechteckige Gestalt aufweist.

33. Verwendung einer Platte nach einem der Ansprüche 1 bis 11, 18 und 19 als Brandschutz.

34. Verwendung eines aus der Umsetzung zur Präzipitation einer Kieselerde stammenden Filterkuchens als Ausgangsmaterial zur Herstellung einer Wärmedämm- und/oder Schallschluckplatte.
